# EUROPÄISCHE PATENTSCHRIFT

(11) **EP 1 226 182 B1**
(45) Veröffentlichungstag und Bekanntmachung des Hinweises auf die Patenterteilung: **09.06.2004**
(21) Anmeldenummer: 00971293.6
(22) Anmeldetag: 28.09.2000
(51) Int. Cl.: C08F 2/34, C08F 2/01, C08F 10/02, B01J 8/00, B01J 8/24, C08F 6/00

(54) **GASPHASENPOLYMERISATIONSVERFAHREN**
GAS PHASE POLYMERIZATION METHOD
PROCEDE DE POLYMERISATION EN PHASE GAZEUSE

(30) Priorität: 06.10.1999 DE 19948280
(43) Veröffentlichungstag der Anmeldung: 31.07.2002
(73) Patentinhaber: Basell Polyolefine GmbH, 50389 Wesseling (DE)
(72) Erfinder: WITT, Michael, 67246 Dirmstein (DE); DECKERS, Andreas, 55234 Flomborn (DE); RIZK, Farid, 67141 Neuhofen (DE); EVERTZ, Kaspar, 67105 Schifferstadt (DE)
(86) Internationale Anmeldenummer: PCT/EP2000/009474
(87) Internationale Veröffentlichungsnummer: WO 2001/025286

(56) Entgegenhaltungen:
- EP-A- 0 341 540
- EP-A- 0 415 427
- EP-A- 0 728 772
- US-A- 4 665 143

## Beschreibung

Die Erfindung betrifft ein Verfahren zur Polymerisation von gasförmigen, ungesättigten Monomeren, insbesondere von Ethylen und mindestens einem α-Olefin in der Gasphase und eine Vorrichtung zur Durchführung eines solchen Verfahrens.

Gasphasenpolymerisationsverfahren werden großtechnisch seit vielen Jahren praktiziert, sie weisen aber immer noch den ein oder anderen Nachteil auf. Ein solches Arbeitsgebiet stellt der Übergang zwischen der eigentlichen Polymerisationszone und der sich im allgemeinen anschließenden Entspannungszone für das die Polymerisationszone verlassende Gemisch aus festem (Co-)Polymer, nichtumgesetztem Monomer bzw. nicht-umgesetzten Monomeren und Inerten dar.

In der EP-B 0 341 540 wird ein Verfahren zur kontinuierlichen Herstellung von Copolymeren aus Ethylen und α-Olefinen beschrieben, bei dem die Monomeren durch katalytische Trockenphasen-Copolymerisation in einer gerührten oder gewirbelten Polymerisationszone (z.B. einem Wirbelbettreaktor) zur Reaktion gebracht werden. Das dabei entstehende Gemisch aus festem Copolymer und nicht umgesetzten gasförmigen Monomeren wird in eine Entspannungszone überführt. Nach dieser Druckreduzierung wird das Gemisch in eine feste und eine gasförmige Phase aufgetrennt. Neben der Rückführung der nicht umgesetzten gasförmigen Monomeren in die Polymerisation wird so vorgegangen, dass die feste Phase mit gasförmigem Ethylen vorgespült und anschließend mit einem N₂/H₂O-Dampf-Gemisch nachgespült wird (jeweils in einem Schachtapparat). Die gasförmigen Phasen können wieder in das Verfahren zurückgeführt werden, und das Copolymer ist weitgehend frei von Restmonomeren, Geruchs- und Geschmacksstoffen. In der Praxis kann diese Aufbereitung allerdings zur Bildung von Stippen führen, welche die Gebrauchsfähigkeit des (Co-)Polymeren stark beeinträchtigen.

Eine Variante des vorstehenden Verfahrens kann der EP-A 0 801 081 entnommen werden, wobei das feste (Co-)Polymer (z.B. aus Ethylen und 1-Hexen) aus einer Gasphasenpolymerisation, das noch nicht-umgesetzte Monomere oder Lösungsmittel (z.B. vom zugegebenen Katalysator) enthält, in zwei Stufen nachbehandelt wird. In einer ersten Stufe wird es mit mindestens einem der in der (Co-)Polymerisation eingesetzten Monomeren (z.B. Ethylen), gegebenenfalls auch in Anwesenheit von Wasserstoff, gespült bzw. getrocknet. In einer zweiten Stufe spült man mit einem, ein Inertgas enthaltenden Trockengas (z.B. N₂). Die Spülung/Trocknung findet in zwei Kesseln statt, sie kann aber auch in einem einzigen Kessel durchgeführt werden. In einem Einkesselsystem enthält dieser z.B. einen spitzdach- oder schirmförmigen Einbau, der den Kessel in eine erste Zone der Behandlung mit dem ersten Trocken-/Spülgas und eine zweite Zone der Behandlung mit dem zweiten Trocken-/Spülgas teilt, und der auch dazu dient, dieses zweite Trocken-/Spülgas nach seinem Einsatz in der zweiten Zone zu sammeln und aus dem Kessel abführen zu können. Der zylindrische Kessel ist am oberen Ende nach oben gewölbt und läuft am unteren Ende konisch zu, so dass der Auslass für das trockene Polymer am tiefsten Punkt des Kessels liegt. Auch hier findet durch die Anwesenheit von Katalysator und zugeführtem polymerisationsfähigem Monomer eine Nachpolymerisation statt, die - wie bereits erwähnt - zur Stippenbildung führen kann.

Einen anderen Weg beschreibt EP-A 0 728 772. Dabei wird das Gemisch der Gasphasenpolymerisation während 5 bis 120 sec. vor der sich anschließenden Entgasung und/oder Spülung des festen Polymeren in einem Zwischengefäß (_{"}lock hopper") mit Ein- und Ausgangsventil zur Nachpolymerisation gebracht, die im wesentlichen unter identischen Druck- und Temperaturbedingungen wie im Hauptpolymerisationskessel stattfindet. Nachteilig an diesem Weg ist einerseits eine leichte Verstopfungsmöglichkeit des Zwischengefäßes und andererseits der Austrag einer großen Menge an komprimiertem Reaktorgas pro Produktmassen-Einheit.

Aufgabe der vorliegenden Erfindung war es, eine Vorrichtung aufzufinden, bei deren Einsatz in der Gasphasenpolymerisation bzw. der Aufarbeitung des Rohprodukts die dargestellten Nachteile nicht auftreten, d.h. ein Verfahren zu finden, das zwar die Nachpolymerisation der noch vorhandenen polymerisierbaren Monomeren mit ihren positiven Wirkungen nutzt, das aber das Risiko von Verstopfungen und Stippenbildung signifikant reduziert.

Das als Lösung dieser Aufgabe gefundene, erfindungsgemäße Verfahren geht aus von dem bekannten Verfahren zur Polymerisation von gasförmigen Olefinen, insbesondere von Ethylen und mindestens einem α-Olefin, in der Gasphase in einer gerührten oder gewirbelten, Katalysator enthaltenden Polymerisationszone und mindestens einer sich an die Polymerisationszone anschließenden Entspannungszone. Das erfindungsgemäße Verfahren ist dann dadurch gekennzeichnet, dass das die Polymerisationszone verlassende Gemisch aus festem (Co-)Polymer und nicht umgesetzten Monomeren vor der Entspannungszone einen Absetzbereich durchläuft. Dabei erwärmt sich das Gemisch im Absetzbereich um mindestens 1 K, bevorzugt um mindestens 2 K, gemessen zwischen seiner Temperatur beim Eintritt in den Absebereich und bei seinem Austritt aus diesem.

Der Absetzbereich wird bevorzugt durch sogenannte Absetzbeine realisiert, deren Öffnung in die Polymerisationszone hineinragt; im Absetzbein sind der Gas- und der Wärmeaustausch mit dem Reaktor weitgehend unterbrochen. Die Polymerisation betrifft bevorzugt die Herstellung von Copolymeren, sie kann aber auch zur Herstellung von Homopolymeren, z.B. aus Ethylen oder Propylen, genutzt werden.

In bevorzugten Ausführungsformen durchläuft das Gemisch ein Absetzbein und es liegt als Cokomponente nur ein α-Olefin, insbesondere 1-Hexen, vor.

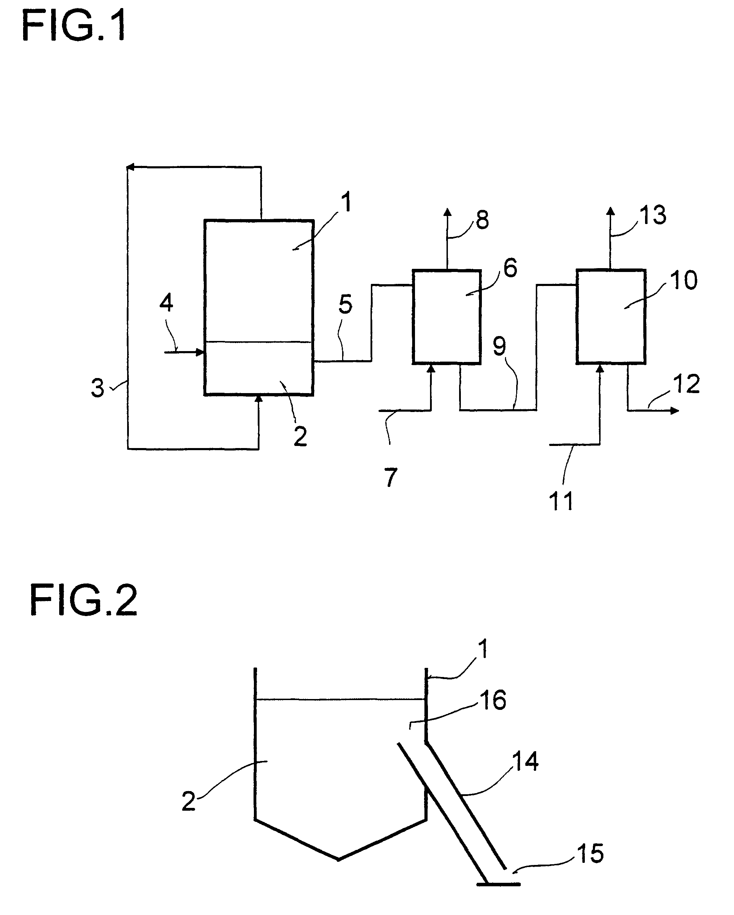

Eine weitere Lösung ist eine Vorrichtung zur Durchführung einer Gasphasenpolymerisation, enthaltend
a) eine Einrichtung mit einer gerührten oder gewirbelten, Katalysator enthaltenden Polymerisationszone zur Polymerisation von gasförmigen Olefinen, insbesondere von Ethylen und mindestens einem α-Olefin,
b) Einrichtungen zum Einbringen von Katalysator und zur Kreislaufführung des gasförmigen Polymerisationsgemisches und
c) mindestens eine als Absetzbein ausgebildete Einrichtung, die zwischen der Einrichtung a) und nachgeschaltenen Einrichtungen einer Entspannungszone angeordnet ist, und die das die Polymerisationszone verlassende Gemisch aus festem (Co-)Polymer und nicht umgesetzten Monomeren durchläuft, dadurch gehennzeichnet, dass sich mindestens 60% der Gesamtlänge des Absatzbeins (14) ausserhalb des Reaktionskessels (1) befindet und thermisch isoliert ist (siehe Fig. 2)

In bevorzugten Ausführungsformen liegt in a) ein Reaktionskessel und in c) zur Entspannung ein Behandlungskessel vor, und die Vorrichtung weist mehrere Absetzbeine auf, wobei auch Vorrichtungen mit nur einem Absetzbein am Reaktionskessel möglich sind.

Die Erfindung wird in der nachstehenden Figurenbeschreibung und den Ausführungsbeispielen noch näher erläutert.

Die wesentlichen Vorteile der Erfindung sind:
- Eine signifikante Erhöhung der pro Volumeneinheit austragbaren Feststoffmenge und damit eine Reduzierung des Anteils an mit-ausgetragenem Reaktorgas.
- Eine zusätzliche Verweilzeit des Reaktorgemisches ohne gleichzeitigen Gasaustausch mit dem Reaktionskessel über eine vorbestimmbare Zeitdauer (im Sekundenbereich, aber auch bis hin zu z.B. 2 min.) mit der Möglichkeit, durch eine homogene Nachpolymerisation mit leicht ansteigender Temperatur den Entgasungsaufwand in der Entspannungszone zu vermindern.
- Eine Verringerung der Gefahr von Verstopfungen bei der großtechnischen Produktion im Betrieb.

In der anliegenden Zeichnung sind dargestellt in
- **Figur 1**: eine schematische Darstellung des Aufbaus einer konventionellen Anlage zur Gasphasenpolymerisation und in
- **Figur 2**: der Teil eines Reaktionsbehälters, der den erfindungsgemäßen Einbau eines Absetzbeines aufweist.

Gemäß Figur 1 wird das gasförmige Reaktionsgemisch aus dem Reaktionskessel 1, in dem es durch eine gerührte oder gewirbelte Polymerisationszone 2, die den Katalysator und das sich bildende feste Mono- oder Copolymere enthält, aufwärts strömt, im Kreislauf 3 wieder in den Kessel 1 zurückgeführt. Der Katalysator wird über den Einlass 4 in den Kessel 1 in Teilschritten oder kontinuierlich eingeführt. Über eine Auslassleitung 5 wird das Rohprodukt der Polymerisation - im wesentlichen enthaltend festes (Co-)Polymer, Katalysator-Anteile und nicht umgesetzte Monomere - in Teilschritten oder kontinuierlich entnommen, in einem ersten Behandlungskessel 6 entspannt und mit z.B. N₂ gespült, der über die Leitung 7 eingebracht wird. Über den Auslass 8 können so vom festen Polymer entfernte Restmonomere wieder in den Reaktionskessel 1 zurückgeführt werden. Über die Leitung 9 wird das vorgespülte Polymer aus dem ersten Behandlungskessel 6 in einen zweiten Behandlungskessel 10 gebracht, in dem es zusätzlich, z.B. mit Hilfe von über die Leitung 11 eingebrachtem N₂/H₂O-Dampf-Gemisch, desodoriert werden kann, um über den Auslass 12 aus dem System entnommen zu werden. Noch vorhandene Restmonomere werden über den Auslass 13 z.B. einer katalytischen Abgasverbrennung zugeführt.

Figur 2 zeigt den Teil eines Reaktionsbehälters, z.B. eines Reaktionskessels 1, der den erfindungsgemäBen Einbau eines sogenannten Absetzbeines 14 enthält. Darunter wird unter den Polymerisationstechnikern ein im allgemeinen rohrförmiges Anlagenteil mit unterschiedlichem Querschnitt verstanden, das z.B. zwischen dem eigentlichen Reaktionsteil eines Reaktionsbehälters und dem Auslass für das Reaktionsprodukt angeordnet ist, und in dem sich ein gebildetes festes Reaktionsprodukt absetzen kann. Typischerweise enthält ein solches Absetzbein einen Auslass 15, der z.B. ein Ventil sein kann. Vorzugsweise ist die Einlassöffnung 16 des Absetzbeines so im Reaktionskessel 1 angeordnet, dass sie sich im unteren Teil der Polymerisationszone 2 befindet, wobei die - aus Blickrichtung des Kesselmittelpunkts gesehen - äußere Rohrwandhälfte in Öffnungsnähe in die Kesselinnenwand integriert ist. Die innere Rohwandhälfte befindet sich dann innerhalb des Kessels. Der größte Teil des Absetzbeines 14, das bedeutet mindestens 60 % seiner Gesamtlänge, befindet sich außerhalb des Reaktionskessels 1. Das dem Absetzbein entnehmbare Polymere kann anschließend einem konventionellen Entspannungsbehälter zugeführt werden, z.B. einem ersten Behandlungskessel 6 oder einem zweiten Behandlungskessel 10 wie in Figur 1 dargestellt.

### Beispiel 1 (erfindungsgemäß)

In einem Gasphasenreaktor mit einer Reaktionszone von 4 m Höhe und einem Innendurchmesser von 50 cm wurden Ethylen und 1-Hexen an einem konventionellen Chrom enthaltenden auf SiO₂ geträgerten Katalysator, der über eine Zeitdauer von 2 h bei einer Temperatur von 700 °C behandelt wurde, copolymerisiert. Das Rohprodukt (150 kg) hatte eine Dichte von 0,942 g/cm³, die mittlere Partikelgröße betrug 800 µm, gemessen nach Rosin, Rammler, Sperling, Bennett, DIN 66145, und die Dichte des Wirbelbetts betrug 290 kg/m³.

Als Absetzbein wurde ein am unteren Ende mit einem Ventil versehenes Rohr mit einer Länge von 70 cm und einem Innendurchmesser von 5 cm eingesetzt, das zu etwa 10% in den Reaktor hinein ragte. Der außerhalb des Reaktors befindliche Teil war thermisch isoliert ausgerührt.

Die eingestellte Verweilzeit des Reaktionsgemisches betrug 1 min im Absetzbein.

In dieser Zeit stieg dort die Temperatur des auszutragenden Produktes um 3 K an.

### Beispiel 2 (Vergieichsbeispiel)

Unter den gleichen Bedingungen wie in Beispiel 1 wurde in dem Gasphasenreaktor ein Copolymer hergestellt, jedoch wurde das Produkt ohne eine zusätzliche Verweilzeit im Absetzbein sofort in den Entspannbehälter überführt. Dioe Ergebnisse sind in der nachfolgenden Tabelle dargestellt:

**Tabelle**

| C₆-Kohlenwaserstoffrestbeladung am Entspannbehälter [ppm] | Beispiel 1 | Beispiel 2 |
|---|---|---|
| am Einlauf | 1300 | 1500 |
| am Auslauf | 100 | 300 |
| Dichte des Copolymers [g/cm³] | 0,942 | 0,942 |
| HLMI _{21,4/190} [dg/min] (ISO 1133) | 22 | 22 |

## Patentansprüche

1. Verfahren zur Polymerisation von gasförmigen Olefinen in der Gasphase in einer gerührten oder gewirbelten, Katalysator enthaltenden Polymerisationszone und mindestens einer sich an die Polymerisationszone anschließenden Entspannungszone, **dadurch gekennzeichnet, dass** das die Polymerisationszone verlassende Gemisch aus festem (Co-)Polymer und nicht umgesetzten Monomeren vor der Entspannungszone einen Absetzbereich durchläuft, wobei es sich um mindestens 1 K erwärmt, gemessen zwischen der Temperatur beim Eintritt in den Absetzbereich und bei seinem Austritt aus diesem.

2. Verfahren nach Anspruch 1, **dadurch gekennzeichnet, dass** das Gemisch ein Absetzbein durchläuft.

3. Verfahren nach Anspruch 1 oder 2, **dadurch gekennzeichnet, dass** ein Copolymer aus Ethylen und einem α-Olefin hergestellt wird.

4. Verfahren nach einem der Ansprüche 1 bis 3, **dadurch gekennzeichnet, dass** ein Copolymer aus Ethylen und 1-Hexen hergestellt wird.

5. Vorrichtung zur Durchführung einer Gasphasenpolymerisation, enthaltend
a) eine Einrichtung (1) mit einer gerührten oder gewirbelten, Katalysator enthaltenden Polymerisationszone (2) zur Polymerisation von gasförmigen Olefinen,
b) Einrichtungen zum Einbringen von Katalysator (4) und zur Kreislaufführung des gasförmigen Polymerisationsgemisches (3) und
c) mindestens eine als Absetzbein ausgebildete Einrichtung (14), die zwischen der Einrichtung (1) und nachgeschalteten Einrichtungen einer Entspannungs-zone (6, 10) angeordnet ist, und das das die Polymerisationszone (2) verlassende Gemisch aus festem (Co-)Polymer und nicht-umgesetzten Monomeren durchläuft,
**dadurch gekennzeichnet, dass** sich mindestens 60 % der Gesamtlänge des Absetzbeines (14) außerhalb des Reaktionskessels (1) befindet und thermisch isoliert ist.

6. Vorrichtung nach Anspruch 5, **dadurch gekennzeichnet, dass** die Einrichtung (1) ein Reaktionskessel ist, dass die Entspannungszone einen Behandlungskessel (6) aufweist und dass mehrere Absetzbeine (14) vorliegen.

7. Vorrichtung nach Anspruch 5 oder 6 , **dadurch gekennzeichnet, dass** das Absetzbein (14) als rohrförmiges Anlagenteil mit unterschiedlichem Querschnitt ausgebildet ist, das einen Auslass (15) enthält, der vorzugsweise ein Ventil ist.

8. Vorrichtung nach einem der Ansprüche 5 bis 7, **dadurch gekennzeichnet, dass** das Absetzbein (14) eine Einlassöffnung (16) enthält, die so in dem Reaktionskessel (1) angeordnet ist, dass sie sich im unteren Teil der Polymerisationszone (2) befindet, wobei die äußere Rohrwandhälfte in Öffnungsnähe in die Kesselinnenwand integriert ist und wobei die innere Rohwandhälfte sich innerhalb des Reaktionskessels (1) befindet.

## Claims

1. A method of polymerizing gaseous olefins in the gas phase in a stirred or fluidized, catalyst-containing polymerization zone and at least one decompression zone downstream of the polymerization zone, **characterized in that** the mixture of solid (co)polymer and unreacted monomers that leaves the polymerization zone flows through a settling zone before the decompression zone, during which it warms up by at least 1 K, measured between the temperature on entry into the settling zone and its exit therefrom.

2. A method according to claim 1, **characterized in that** the mixture flows through a settling leg.

3. A method according to claim 1 or 2, **characterized in that** a copolymer of ethylene and an α-olefin is produced.

4. A method according to any one of claims 1 to 3, **characterized in that** a copolymer of ethylene and 1-hexene is produced.

5. Apparatus for carrying out a gas phase polymerization, comprising
a) a device (1) having a stirred or fluidized, catalyst-containing polymerization zone (2) for polymerizing gaseous olefins,
b) devices for introducing catalyst (4) and for recirculating the gaseous polymerization mixture (3) and
c) at least one device (14) which is configured as a settling leg and which is disposed between the means (1) and downstream devices of a decompression zone (6, 10), wherein the mixture of solid (co)polymer and unreacted monomers that leaves the polymerization zone (2) flows through a settling zone before the decompression zone,
**characterized in that** at least 60% of the total length of the settling leg (14) is situated outside the reaction tank (1) and is thermally insulated.

6. Apparatus according to claim 5, **characterized in that** the device (1) is a reaction tank, **in that** the decompression zone comprises a treatment tank (6) and **in that** there are a plurality of settling legs (14).

7. Apparatus according to claim 5 or 6, **characterized in that** the settling leg (14) is configured as a tubular component which has a different cross section and which contains an outlet (15) which is preferably a valve.

8. Apparatus according to any one of claims 5 to 7, **characterized in that** the settling leg (14) contains an inlet aperture (16) which is disposed in the reaction tank (1) in such a way that it is situated in the lower portion of the polymerization zone (2), the outer half of the tube wall being integrated into the tank inner wall in the vicinity of the aperture and the inner half of the tube wall being situated within the reaction tank (1).

## Revendications

1. Procédé de polymérisation d'oléfines gazeuses en phase gazeuse dans une zone de polymérisation sous agitation ou en lit fluidisé, contenant un catalyseur, et d'au moins une zone de détente qui suit la zone de polymérisation, **caractérisé en ce que** le mélange sortant de la zone de polymérisation, constitué d'un (co)-polymère solide et de monomères n'ayant pas réagi, traverse en amont de la zone de détente une zone de dépôt, ce à l'occasion de quoi il s'échauffe d'au moins 1 K, cet échauffement étant mesuré entre la température à l'entrée de la zone de dépôt et la température en sortie de cette dernière.

2. Procédé selon la revendication 1, **caractérisé en ce que** le mélange passe par une goulotte de dépôt.

3. Procédé selon la revendication 1 ou 2, **caractérisé en ce qu'**il permet de fabriquer un copolymère d'éthylène et d'une α-oléfine.

4. Procédé selon l'une des revendications 1 à 3, **caractérisé en ce qu'**il permet de fabriquer un copolymère d'éthylène et de 1-hexène.

5. Appareillage pour mettre en oeuvre une polymérisation en phase gazeuse, contenant
a) un dispositif (1) comportant une zone de polymérisation (2), sous agitation ou à lit fluidisé, contenant un catalyseur, pour la polymérisation d'oléfines gazeuses,
b) des dispositifs pour introduire un catalyseur (4) et pour faire circuler en circuit fermé le mélange gazeux de polymérisation (3) et
c) au moins un dispositif (14), constitué d'une goulotte de dépôt, qui est disposé entre le dispositif (1) et des dispositifs installés en aval et appartenant à une zone de détente (6, 10), et qui est traversée par le mélange sortant de la zone de polymérisation (2), lequel est constitué d'un (co)-polymère solide et de monomères n'ayant pas réagi,
**caractérisé en ce qu'**au moins 60 % de la longueur totale de la goulotte de dépôt (14) se trouvent à l'extérieur du réacteur (1) et sont thermiquement isolés.

6. Appareillage selon la revendication 5, **caractérisé en ce que** le dispositif (1) est un réacteur, que la zone de détente comporte une cuve de traitement (6), et que l'on est en présence de plusieurs goulottes de dépôt (14).

7. Appareillage selon la revendication 5 ou 6, **caractérisé en ce que** la goulotte de dépôt (14) est configurée comme un élément tubulaire d'installation à section transversale variable, qui contient un orifice de sortie (15), lequel est de préférence une vanne.

8. Appareillage selon l'une des revendications 5 à 7, **caractérisé en ce que** la goulotte de dépôt (14) contient un orifice d'entrée (16), qui est disposé dans le réacteur (1) de façon que la zone de polymérisation (2) se trouve dans la partie inférieure, la moitié extérieure de la paroi tubulaire étant intégrée, en un point proche de l'ouverture, dans la paroi intérieure du réacteur, la moitié intérieure de la paroi tubulaire se trouvant à l'intérieur du réacteur (1).
